# EUROPÄISCHE PATENTSCHRIFT

(11) **EP 2 185 339 B1**
(45) Veröffentlichungstag und Bekanntmachung des Hinweises auf die Patenterteilung: **28.03.2012**
(21) Anmeldenummer: 08774620.2
(22) Anmeldetag: 02.07.2008
(51) Int. Cl.: B29C 53/04, B29C 70/34

(54) **Verfahren zur Herstellung eines Bauteils**
Process for the production of a component
Procede de fabrication d'un composant

(30) Priorität: 09.08.2007 DE 102007037649; 09.08.2007 US 964170 P
(43) Veröffentlichungstag der Anmeldung: 19.05.2010
(73) Patentinhaber: Airbus Operations GmbH, 21129 Hamburg (DE)
(72) Erfinder: EDELMANN, Klaus, 28199 Bremen (DE); MENKEN, Tanja, 27367 Horstedt (DE); STÖVEN, Timo, 28201 Bremen (DE); WIRTZ, Tobias, 28209 Bremen (DE)
(74) Vertreter: Peckmann, Ralf
(86) Internationale Anmeldenummer: PCT/EP2008/058481
(87) Internationale Veröffentlichungsnummer: WO 2009/019083

(56) Entgegenhaltungen:
- EP-A- 0 603 066
- EP-A- 1 145 829
- GB-A- 841 371

## Beschreibung

Die Erfindung betrifft ein Verfahren zur Herstellung eines Bauteils, insbesondere eines Winkels zur Anbindung einer Rumpfzellenhaut an einen Ringspant eines Flugzeugs, wobei das Bauteil durch mehrmaliges Abkanten eines ebenen Zuschnittes entlang von mindestens zwei Kantlinien umgeformt werden soll, und der Zuschnitt mit einem mit mehreren Faserlagen verstärkten thermoplastischen Kunststoff gebildet ist.

EP-A-1145829 offenbart ein Verfahren zur Herstellung eines Bauteils mit folgenden Schritten:
- Bereitstellen eines Zuschnitts, welcher einen thermoplastischen Kunststoff aufweist, der mit mehreren Faserlagen verstärkt ist;
- Auflegen des Zuschnitts auf ein Ober- oder Unterwerkzeug einer Presse;
- Zusammenfahren der Presse zum Bilden der finalen Kantenlinien und damit Bilden des Bauteils.

Die Rumpfzelle eines Flugzeugs wird bei der nach wie vor verbreitet angewendeten Aluminiumsektionsbauweise im Allgemeinen aus einer Vielzahl von hintereinander angeordneten und durch umlaufende Quernähte verbundenen Rumpfsektionen, die jeweils mit mindestens zwei Schalensegmenten gebildet sind, hergestellt. Zur Gewichtseinsparung werden die Rumpfsektionen zunehmend mit Verbundwerkstoffen, insbesondere mit kohlenstofffaserverstärkten Kunststoffen (CFK), gefertigt. Bei dieser Bauweise wird eine CFK-Rumpfzellenhaut mit Ringspanten, die gleichfalls mit CFK-Profilen gebildet sind, innenseitig ausgesteift. Parallel zur Längserstreckung der Rumpfsektion sind auf einer Innenfläche der Rumpfzellenhaut über den Umfang hinweg gleichmäßig verteilt CFK-Längsversteifungsprofile ("Stringerprofile") angeordnet. Die Stringerprofile werden bevorzugt gleich bei der Herstellung der CFK-Rumpfzellenhaut mit ausgebildet. Die Anbindung zwischen den Ringspanten und der Rumpfzellenhaut erfolgt mit Winkeln (so genannte "Clips"). Diese Winkel weisen im Wesentlichen einen Schenkel zur Anlage am Ringspant und einen weiteren Schenkel zur Anlage an der Rumpfzellenhaut auf. Die Anbindung der Winkel an die Ringspante und die Rumpfzellenhaut kann wahlweise durch Kleben, Nieten, Schrauben, Schweißen oder eine Kombination hiervon erfolgen.

Um Korrosionsprobleme im Kontaktbereich mit dem Verbundmaterial zu vermeiden und das Gewicht weiter zu verringern, werden die Winkel anstatt aus gekanteten Aluminiumblechplatinen ebenfalls mit einem faserverstärkten Kunststoffmaterial hergestellt. Da die Fertigung der in sehr großer Stückzahl (mehr als 100.000 Stück pro Flugzeug) benötigten Winkel mit kohlefaserverstärkten duroplastischen Kunststoffen zu zeitaufwändig ist, werden plattenförmige Halbzeuge (so genannte "Organobleche"), die mit kohlenstofffaserverstärkten thermoplastischen Kunststoffen gebildet sind, verwendet.

Bei der Umformung derartiger plattenförmiger, gewebeverstärkter thermoplastischer Kunststoffe ist anders als bei der herkömmlichen metallischen Blechumformung die Herstellung (Formgebung und Konsolidierung) des Bauteils in einem einzigen Umformschritt erforderlich. Dabei wird der gesamte Zuschnitt zunächst erhitzt und nach dem Überschreiten der Schmelztemperatur in ein Umformwerkzeug verbracht und zum Beispiel mittels eines in einer Presse positionierten Oberwerkzeugs zum fertigen Bauteil umgeformt und konsolidiert. Dabei können mit einer einachsigen Presse lediglich Umformungen realisiert werden, bei denen die lineare Schließbewegung des Oberwerkzeugs auf ein Unterwerkzeug dafür sorgt, dass das plastifizierte kohlefaserverstärkte thermoplastische Material in die gewünschte Position gebracht wird. Durch diese Voraussetzung wird das Bauteildesign stark eingeschränkt. Erfordert eine konstruktive Vorgabe hinsichtlich des Bauteils zum Beispiel mehrere aufeinander folgende Umformschritte - wie im Fall der Aluminiumblechumformung ohne weiteres realisierbar -, so ist dies bei den "Organo"-Blechen bislang nicht umsetzbar, da stets das gesamte Bauteil vollständig aufgeschmolzen, das heißt plastifiziert werden muss und beim anschließenden Formgebungsprozess (Pressen) wieder komplett konsolidiert wird, also sämtliche Werkstückflächen mit einem hinreichend hohen Druck beaufschlagt werden müssen.

Ferner ist zu berücksichtigen, dass beim Umformen von "Organo"-Blechen zwingend das so genannte "interlaminare Gleiten" auftritt, das heißt die übereinandergeschichteten Faserlagen in der kohlefaserverstärkten thermoplastischen Platte verschieben sich bedingt durch die innen- und außenseitig jeweils unterschiedlichen Kantradien in Relation zu einander. Hierdurch kann es beim Umformen zu einer Beeinträchtigung des Verlaufs und der Integrität der Faserarmierung kommen.

Bei der Herstellung von komplexen Teilen durch das (Ab-)Kanten bzw. Umformen von "Organo"-Blechen ist die aus der Aluminiumblechumformung hinlänglich bekannte Vorgehensweise mit Mehrfachabkantungen nicht anwendbar.

Aufgabe der Erfindung ist es daher, die aus der Aluminiumblechumformung bekannte Umformtechnik dahingehend weiterzubilden, dass aus ebenen Zuschnitten eines faserverstärkten thermoplastischen Kunststoffmaterials ("Organo"-Blech) komplexe dreidimensionale, einstückige Bauteile durch (Ab-)Kanten gefertigt werden können.

Diese Aufgabe wird durch ein Verfahren mit den Merkmalen des Patentanspruchs 1 gelöst.

Dadurch, dass der Zuschnitt in einem ersten Umformschritt unter weitgehendem Abschluss des Gleitens der Faserlagen zu einem Vorformling umgeformt wird und in einem zweiten Umformschritt die abschließende Formgebung des Vorformlings zur Erzeugung des Bauteils erfolgt,

ist das interlaminare Gleiten vor dem zweiten Umformschritt abgeschlossen, da dieses zwischen den einzelnen Faserlagen bereits im ersten Umformschritt erfolgte. Hierdurch ist die Herstellung von Bauteilen aus faserverstärkten thermoplastischen Kunststoffen mit einer komplexen Geometrie durch Umformen bzw. Kanten möglich. Aus einem ebenen Zuschnitt (erste Ebene) wird zur Erzeugung eines Vorformlings verfahrensgemäß mindestens eine weitere Ebene unter Bildung mindestens einer Kantlinie generiert, wobei aus der dieser Ebene - ohne eine Beeinträchtigung des Faserverlaufs und/oder der Faserintegrität im Vorformling - weitere Ebenen durch erneutes Kanten erzeugt werden können, deren Kantlinien unter Winkeln von 0° bis 90° - also nicht zwingend parallel - in Bezug zur ersten Kantlinie verlaufen können. Im Gegensatz hierzu müssen bisher die Kantlinien stets in einer Ebene liegen oder parallel zueinander verlaufen.

Zur Durchführung des Verfahrens wird ein ebener Zuschnitt aus einer ebenen Platte eines mit einer Vielzahl von Faserlagen verstärkten thermoplastischen Kunststoffs ("Organo"-Blech) herausgetrennt. Die Faserlagen können mit Kohlenstofffasern, Glasfasern, Aramid^{®}-Fasern, Kevlar^{®}-Fasern, Basaltfaser, Naturfasern oder dergleichen gebildet sein, die gewebeartig übereinander liegend in die thermoplastische Kunststoffmatrix eingebettet sind. Alternativ können die Faserlagen mit Fasergelegen, Fasergewirken oder diskreten Rovings aufgebaut sein.

Anschließend wird der Zuschnitt über den Bereich der Schmelztemperatur des Kunststoffes erhitzt und unter im Idealfall vollständigem Abschluss des interlaminaren Gleitens in einem ersten Umformschritt zu einem Vorformling umgeformt bzw. drapiert. Dabei gleiten die einzelnen Lagen innerhalb der Verstärkungsfaseranordnung aufeinander ab. Der Terminus des "Drapierens" bedeutet in diesem Zusammenhang das im Wesentlichen faltenfreie Umformen eines zunächst noch ebenen, faserverstärkten Flächengebildes in eine räumliche Struktur.

Nach dem Abkühlen des Vorformlings wird dieser in einem weiteren Verfahrensschritt erneut plastifiziert, wobei eine Lagefixierung des Vorformlings in der Regel erforderlich ist, um eine undefinierte Zurückverformung in den ebenen Zustand zu verhindern. Für den Fall, dass der Vorformling beispielsweise zur Herstellung eines Winkels dient, kann eine Lagefixierung der vorgeformten Schenkel mittels einer Klemme erfolgen, deren äußere Gestalt einer beispielsweise konventionellen Krawattenklammer angenähert ist. Wenn der Vorformling die erforderliche Umformtemperatur, die in der Regel geringfügig oberhalb der Schmelztemperatur des verwendeten thermoplastischen Kunststoffes liegt, erreicht hat, wird der Vorformling in eine Presse mit einem Oberwerkzeug und einem Unterwerkzeug verbracht. Durch das Zusammenfahren der Presse erfolgt in diesem zweiten Umformschritt die endgültige Formgebung, das heißt die so genannte Konsolidierung des Bauteils durch die im Idealfall allseitige und gleichmäßige Anwendung von Druck. Das Ober- und das Unterwerkzeug innerhalb der Presse können gegebenenfalls zusätzliche Heizeinrichtungen aufweisen. Im Falle hinreichend kurzer Zykluszeiten bei der Herstellung des Vorformlings sowie des Pressvorgangs können die beiden Umformschritte zusammengefasst werden, so dass eine einmalige Erwärmung des Zuschnittes ausreichend ist.

Entscheidend für das erfindungsgemäße Verfahren ist, dass nach dem ersten Umformschritt das zwangsläufig auftretende interlaminare Gleiten der Faserlagen bereits weitgehend abgeschlossen ist und während des zweiten Umformschrittes nur noch die endgültige geometrische Formgebung bzw. die Konsolidierung durch die Anwendung von im Idealfall allseitig und gleichstark wirkendem Druck in den Presswerkzeugen erfolgt. Zur Erzeugung komplexer Bauteilgeometrien wird bei dem erfindungsgemäßen Verfahren nicht mehr sukzessiv eine Ebene aus einer vorher abgekanteten Ebene durch erneutes Abkanten nach erneuter Plastifizierung gebildet, sondern es werden alle für das Design erforderlichen Bauteilebenen schon bei der Herstellung des Vorformlings im ersten Verfahrensschritt quasi "latent" angelegt. Nach Maßgabe des erfindungsgemäßen Verfahrens erfolgt das Gleiten der Faserlagen im Wesentlichen immer senkrecht zur betreffenden Kantlinie, so dass es durch die Umformungen zu keinen festigkeitsreduzierenden Beeinträchtigungen (z.B. Verzerrungen, Verschiebungen) in der Faserarmierung kommt.

Infolge des interlaminaren Gleitens kommt es unweigerlich zu Anschäftungen, das heißt schräg verlaufenden Bauteilkanten der verfahrensgemäß hergestellten Bauteile. Diese Anschäftungen werden durch eine in der Regel mechanisch erfolgende Nachbearbeitung der Bauteilkanten beseitigt bzw. abgetrennt oder abgeschliffen, um die vorgegebene Bauteilkontur zu erzielen.

Zur Herstellung des Bauteils nach Maßgabe des Verfahrens kommen bevorzugt thermoplastische Kunststoffe wie zum Beispiel PPS, PEEK, PEKK oder eine beliebige Kombination hiervon zum Einsatz, die bevorzugt mit mehreren Faserlagen aus Kohlefasern armiert sind.

Dadurch, dass das Bauteil mindestens zwei, unter einem Winkel von etwa 0° bis 90° zueinander verlaufende Kantlinien aufweist und die Kantlinien in mindestens zwei unterschiedlichen Ebenen liegen,
erfüllt das Bauteil eine Vielzahl von Designanforderungen bei einem zugleich kraftflussorientierten Verlauf der Verstärkungsfasern und kann somit beispielsweise in großer Stückzahl zur Anbindung von CFK-Ringspanten an eine CFK- Rumpfzellenaußenhaut eines Flugzeugs eingesetzt werden. Darüberhinaus weist das Bauteil ein sehr geringes Gewicht bei einer gleichzeitig hohen statischen und dynamischen Belastbarkeit auf und kann zudem wirtschaftlich in großer Stückzahl mit engen Bauteiltoleranzen gefertigt werden.

Weitergehende vorteilhafte Ausgestaltungen des Verfahrens sowie des Bauteils sind in den weiteren Patentansprüchen dargelegt.

In der Zeichnung zeigt:
- **Fig. 1**: eine schematische Darstellung des ebenen, einstückigen Zuschnittes mit noch "weichen Kantlinien" (vorangelegten Kantlinien) zur Herstellung des Vorformlings,
- **Fig. 2**: eine perspektivische Ansicht des drapierten Vorformlings mit einem lagefixierten Bereich nach dem ersten Umformschritt,
- **Fig. 3**: eine Draufsicht auf den Vorformling nach Abschluss des zweiten Umformschrittes,
- **Fig. 4**: eine perspektivische Ansicht eines exemplarischen Bauteils (Winkel bzw. Anbindungswinkel) nach Abschluss des zweiten Umformschrittes im Endzustand,
- **Fig. 5**: eine perspektivische Ansicht eines zum Konsolidieren bzw. zur endgültigen Formgebung des Vorformlings in einer Presse eingesetzten Unterwerkzeugs, und
- **Fig. 6**: einen alternativen Vorformling zur Herstellung eines weiteren Bauteils mit komplexer geometrischer Gestalt.

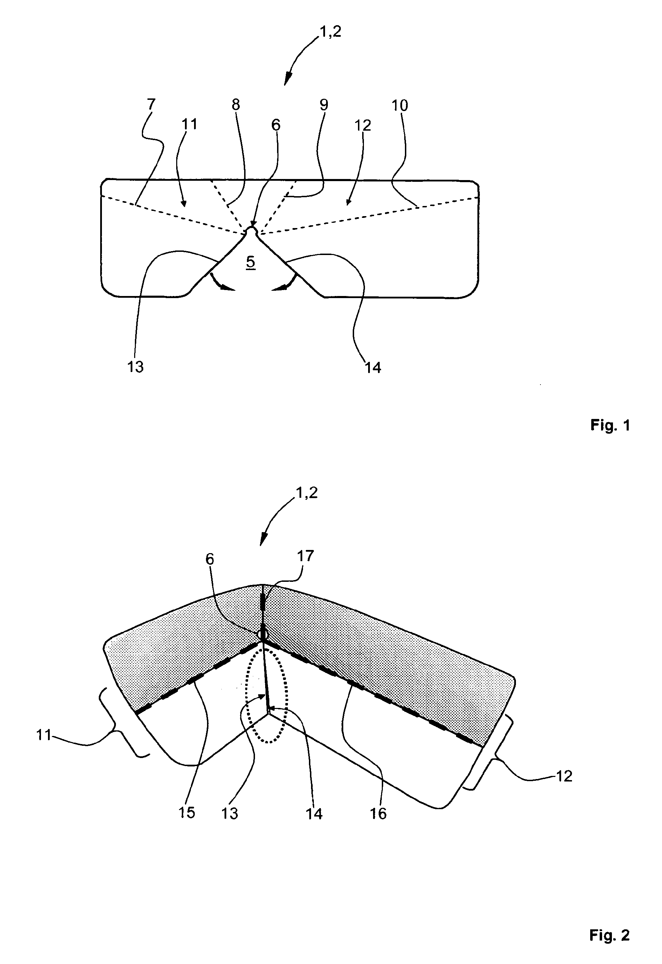

In der Zeichnung weisen dieselben konstruktiven Elemente jeweils die gleiche Bezugsziffer auf. Im weiteren Fortgang der Beschreibung wird zunächst auf die Fig. 1 bis 4 zugleich Bezug genommen.

Die **Fig. 1** zeigt eine Draufsicht auf einen zunächst noch ebenen Zuschnitt 1, der als Vorstufe zur Herstellung des Vorformlings 2 und des fertigen Bauteils 3 durch mehrere Abkantungen dient. Das fertige Bauteil 3 ist im gezeigten Ausführungsbeispiel ein (Anbindungs-)Winkel 4 bzw. ein Knotenblech zur innenseitigen Befestigung von Ringspanten an einer Rumpfzellenhaut eines Flugzeugs. Der Zuschnitt 1 ist bevorzugt mit einem mit mehreren Faserlagen, insbesondere Kohlefaserlagen, armierten thermoplastischen Kunststoffmaterial gebildet. Als geeignetes thermoplastisches Kunststoffmaterial kommen insbesondere PPS, PEEK, PEKK oder eine beliebige Kombination hiervon in Betracht.

Der einstückige Zuschnitt 1 weist einen im Wesentlichen V-förmigen Ausschnitt 5 auf, dessen Spitze in eine ungefähre Kreisausnehmung 6 zur Spannungsentlastung des Ausschnittes 5 auslaufen kann. Die gestrichelt dargestellten Kantlinien 7 bis 10 definieren so genannte "weiche" Krümmungsbereiche 11,12, in denen es bei der Schaffung des Vorformlings 2 im ersten Umformschritt im Wesentlichen zu Krümmungen des Zuschnittes 1 kommt. Die "weichen" Kantlinien 7 bis 10 begrenzen die Krümmungsbereiche 11,12, in denen eine Umformung erfolgen kann. Die "weichen" Kantlinien 7 bis 10 bilden somit "vorangelegte", latente und noch nicht endgültige ausgebildete Kantlinien, zwischen denen die finalen "scharfen" Kantlinien während der Konsolidierung im zweiten Umformschritt entstehen. Die beiden schwarzen Pfeile in der Fig. 1 veranschaulichen die Bewegungsrichtung der Kanten 13,14 des V-förmigen Ausschnittes 5 beim Übergang vom Zustand der Fig. 1 zum Status der Fig. 2. Die Transformation bzw. das Drapieren des einstückigen Zuschnittes 1 in den Vorformling 2 während des ersten Umformschrittes erfolgt im Bereich der Plastifizierungstemperatur des Zuschnittes 1, die in der Regel im Bereich der Schmelztemperatur des eingesetzten thermoplastischen Kunststoffes liegt. Auch für den Vollzug des zweiten Umformschrittes ist es erforderlich, den Vorformling 2 bis in den Bereich der Schmelztemperatur des verwendeten thermoplastischen Kunststoffes zu erwärmen.

In der angedeutet perspektivischen Darstellung der **Fig. 2** hat der Vorformling 2 seine für den zweiten Umformschritt erforderliche geometrische Gestalt erreicht, das heißt der erste Umformschritt des erfindungsgemäßen Verfahrens ist abgeschlossen. Von entscheidender Bedeutung ist, dass das Übereinandergleiten der einzelnen parallel verlaufenden Faserlagen in diesem Verfahrensstadium im Idealfall nahezu vollständig beendet ist. Demzufolge treten beim sich anschließenden zweiten Umformschritt im Vorformling 2 keine Faltenbildungen, Verwerfungen, Hohlraumbildung oder Delaminationen mehr auf und die Integrität sowie die Verlaufsrichtung der Faserlagen werden nicht beeinträchtigt, so dass das fertige Bauteil 3 eine sehr hohe statische und dynamische mechanische Belastbarkeit erreicht.

Durch die punktierte Ellipse wird eine gegebenenfalls erforderliche mechanische Lagefixierung der Kanten 13,14 im Zuge der erneuten Erwärmung für den zweiten finalen Umformschritt symbolisch dargestellt. Hierdurch wird beim Wiedererwärmen eine unkontrollierte Zurückverformung des Vorformlings 2 in die ebene Gestalt des Zuschnittes 1 verhindert. Das Abkanten des Vorformlings 2 im zweiten Umformschritt während der Konsolidierung erfolgt im Wesentlichen ausschließlich entlang von finalen Kantlinien 15 bis 17, die den endgültigen Verlauf der Abkantungen verkörpern. Deutlich zu erkennen ist, dass die drei finalen Kantlinien 15 bis 17 senkrecht zueinander verlaufen.

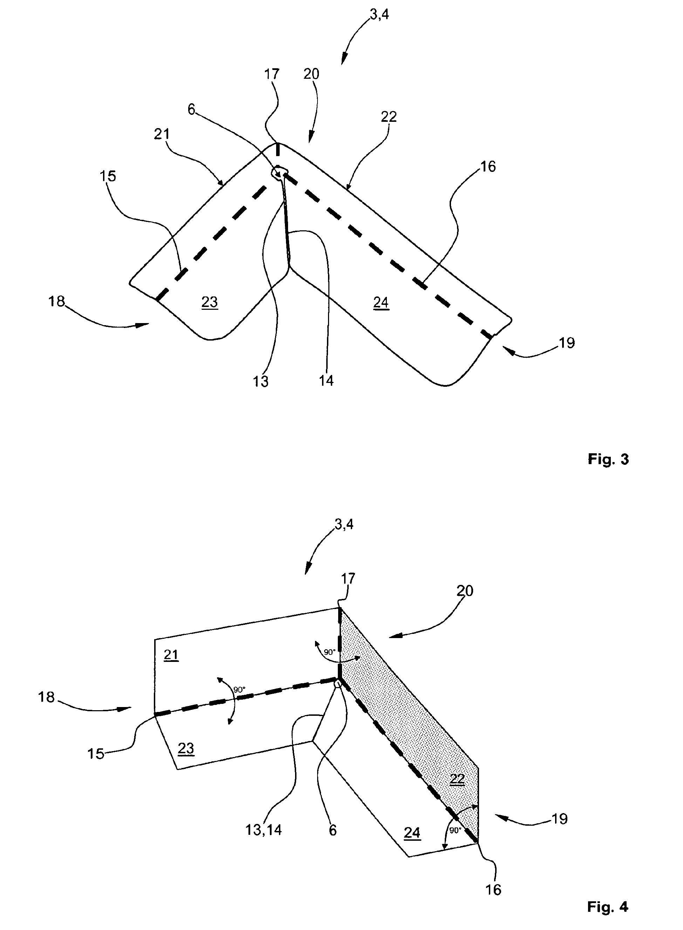

Die **Fig. 3** und **4** zeigen den bereits zum fertigen Bauteil 3 bzw. dem Winkel 4 umgeformten Vorformling 2 in einer Draufsicht bzw. in einer perspektivischen Ansicht. Der Winkel 4 weist die drei orthogonal aufeinander stoßenden, finalen Kantlinien 15 bis 17 auf, die sich beim endgültigen Umformen bzw. beim Konsolidieren des Vorformlings 2 im zweiten Verfahrensschritt letztendlich ergeben. Im Allgemeinen verlaufen die Kantlinien 15 und 16 zwischen den beiden durch die "weichen" Kantlinien 7,8 und 9,10 aufgespannten Krümmungsbereichen 11,12.

In den Fig. 3, 4 ist die Konsolidierung des Vorformlings 2 im Zuge des zweiten Umformschrittes des Verfahrens vollständig beendet, das heißt das Bauteil 3 bzw. der Winkel 4 weist im Wesentlichen die endgültige geometrische Gestalt auf. Zur Durchführung des zweiten Umformschrittes wird der Vorformling 2 zunächst wieder auf eine oberhalb der Schmelztemperatur des thermoplastischen Kunststoffes liegende Temperatur gebracht, wobei eine Lagesicherung durch geeignete Klemmorgane oder dergleichen erforderlich ist. Danach wird der Vorformling 2 in eine Presse mit einem Oberwerkzeug und einem Unterwerkzeug verbracht, wobei der Vorformling auf das Unterwerkzeug aufgelegt wird. Durch das Zusammenfahren der Presse erfolgt die endgültige Formgebung des zwischen dem Ober- und Unterwerkzeug befindlichen Vorformlings 2 bzw. dessen Konsolidierung durch den Pressendruck. Bei sehr kurzen Zykluszeiten des ersten und des zweiten Umformschrittes ist eine erneute Erwärmung des Vorformlings vor dem zweiten Umformschritt entbehrlich. Das fertige Bauteil 3 bzw. der Winkel 4 im gezeigten Ausführungsbeispiel weist aufgrund der interlaminaren Verschiebungen der Faserlagen immer Anschäftungen im Randbereich auf. Die schräg stehenden Bauteilkanten werden für die abschließende Verwendung des Bauteils 3 mechanisch nachbehandelt, um die endgültige Bauteilkontur zu erzielen.

Der Winkel 4 weist zwei Schenkel 18,19 auf, die im Wesentlichen senkrecht aneinander anschließen. Der Winkel 4 hat darüber hinaus eine durchgehende Rückfläche 20, die durch zwei im Wesentlichen senkrecht aneinander grenzende Ebenen 21,22 (Anlageflächen des Winkels 4) gebildet ist. An die Ebenen 21,22 schließen sich nach unten jeweils zwei weitere Ebenen 23,24 (Basisflächen des Winkels 4) unter einem Winkel von gleichfalls etwa 90° an. Sowohl die Ebenen 21,22 als auch die Ebenen 23,24 können erforderlichenfalls in einer oder zwei Richtungen des Raumes gekrümmt gestaltet werden. Die Ebenen 23,24 liegen entlang der Kanten 13,14 ungefähr parallel aneinander an. Alternativ ist es gleichfalls möglich, dass die Kanten 13,14 beispielsweise parallel zu einander beabstandet verlaufen. Nach Maßgabe einer nicht dargestellten Ausführungsvariante können die Kanten 13,14 während des Konsolidierungsprozesses auch fest miteinander verschmolzen oder verklebt werden, um die Festigkeit des Winkels 4 weiter zu erhöhen. Mittels der Ebenen 21,22 sowie der Ebenen 23,24 erfolgt mittels des Winkels 4 das Interface zwischen unterschiedlichen Komponenten eines Flugzeugs, wie zum Beispiel eine innenseitige Anbindung eines Ringspants an eine Rumpfzellenhaut.

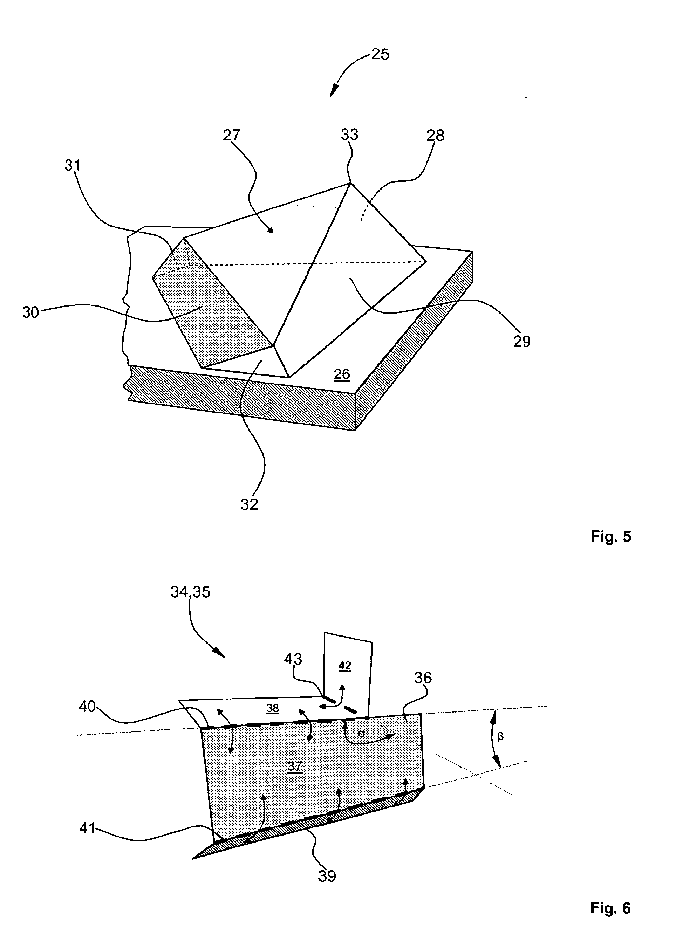

Die **Fig. 5** zeigt ein Unterwerkzeug 25 in einer nicht dargestellten Presse, das zur Konsolidierung des Vorformlings 2 im zweiten Umformschritt benutzt wird. Das Unterwerkzeug 25 hat die Form eines ungleichmäßigen Polyeders und ist auf einer Grundplatte 26 angeordnet, die in eine Presse eingesetzt wird. Das Unterwerkzeug 25 weist insgesamt sechs ebene Flächen 27 bis 32 auf. Die obere Fläche 27 ist ein gleichseitiges Dreieck, während die hinteren beiden, kleineren Seitenflächen 31,32 die Form eines ungleichmäßigen bzw. rechtwinkligen Dreiecks haben. Die beiden großen vorderen Seitenflächen 28,29 weisen die geometrische Gestalt eines ungleichmäßigen Vierecks auf während die hintere Seitenfläche 30 trapezförmig ist. Sämtliche Flächen 27 bis 32 sind in Bezug auf die Grundplatte 26 geneigt ausgebildet. Der Grundriss des Unterwerkzeugs 25 entspricht einem unregelmäßigen Fünfeck.

Zur abschließenden Konsolidierung des durch Hitzeeinwirkung hinreichend plastifizierten Vorformlings 2 wird dieser so auf das Unterwerkzeug 25 aufgelegt, dass die Kreisausnehmung 6 im Bereich einer Werkzeugspitze 33 aufliegt, wobei sich die später abgekanteten Basisflächen 23,24 an den großen Seitenflächen 27,29 zumindest bereichsweise anschmiegen.

Anschließend wird das in der Darstellung der Fig. 5 nicht dargestellte Oberwerkzeug und das Unterwerkzeug 25 mittels einer Presse zusammengefahren, um den dazwischen befindlichen Vorformling 2 zu konsolidieren bzw. ihm endgültig die vorgegebene geometrische Gestalt zu verleihen. Das Oberwerkzeug ist korrespondierend zum Unterwerkzeug 25 ausgebildet, das heißt zwischen dem Ober- und dem Unterwerkzeug 25 lässt sich zumindest bereichsweise ein Formschluss herstellen. Ein sich zwischen dem Ober- und dem Unterwerkzeug 25 ergebender Hohlraum ist hierbei bevorzugt so bemessen, dass sich beim Zusammenfahren der Werkzeuge ein gleichmäßiger Anpressdruck über die gesamte Oberfläche des Vorformlings hinweg einstellt. Das Ober- und/oder das Unterwerkzeug 25 können mit Heizeinrichtung zur Temperierung ausgestattet sein.

Alternativ kann die Konsolidierung des Vorformlings mit einem Werkzeug erfolgen, das mit mindestens einem Handhabungsgerät, insbesondere mit einem Standard-Knickarmroboter mit mehreren Freiheitsgraden (Industrieroboter), geführt wird. Zur Vereinfachung der geometrischen Gestalt des Werkzeugs können die abgeschrägten Flächen 31,32 entfallen, so dass das Unterwerkzeug 25 und das hierzu korrespondierend ausgestaltete Oberwerkzeug einen dreieckförmigen Grundriss aufweisen.

Nach dem Entformen des fertigen Bauteils 3 in Gestalt des Winkels 4 und einer sich gegebenenfalls anschließenden Abkühlphase, werden die Anschäftungen im Kantenbereich zur Schaffung der endgültigen Bauteilkontur mechanisch nachbearbeitet.

Die **Fig. 6** zeigt eine perspektivische Ansicht eines weiteren Vorformlings 34 zur Herstellung eines Bauteils 35 (Winkel) mit einer komplexen Geometrie, wobei der Vorformling 34 mit einem Zuschnitt 36 aus einem "Organo"-Blech durch Kanten geformt wurde. Der Vorformling 34 wird zur endgültigen Formgebung in einem geeigneten Werkzeug konsolidiert, das heißt allseitig mit möglichst gleichmäßig wirkendem Pressdruck beaufschlagt.

An den anfänglich noch ebenen Zuschnitt 36, der eine erste (Grund-)Ebene 37 darstellt, schließt sich eine durch Umformen bzw. (Ab-)Kanten generierte zweite und dritte Ebene 38,39 an. Die hierdurch erzeugten Kantlinien 40,41 verlaufen im Ausführungsbeispiel unter einem Winkel β von etwa 10° zueinander und liegen beide in der Ebene 37. Grundsätzlich sind hier auch Winkel β von 0° bis 90° möglich. Eine weitere (vierte) Ebene 42 schließt sich nach oben unter Bildung einer dritten Kantlinie 43 an die zweite Ebene 38 rechtwinklig an. Die dritte Kantlinie 43 liegt in der vierten Ebene 42, die von der ersten und zweiten Ebene 37,38 verschieden ist und schließt zudem mit der Kantlinie 40 - die in der ersten Ebene 37 liegt - einen Winkel α von etwa 90° ein. Die dritte Kantlinie 43 kann bei einer abweichend ausgeführten Kantung auch unter einem Winkel α zwischen 0° und 90° - bevorzugt unter einem Winkel zwischen 30° und 90° - verlaufen.

Damit weist der Vorformling 34 im Ergebnis drei Kantlinien 40,41,43 auf, die jeweils mit Winkeln zwischen 0° und 90° zueinander verlaufen.

Die Gleitrichtungen der Verstärkungsfaserlagen im Zuschnitt 36 sind durch kleine, nicht mit einer Bezugsziffer versehene schwarze Pfeile angedeutet, wobei erkennbar ist, dass die Gleitrichtungen der Faserlagen jeweils ungefähr senkrecht zur zugehörigen Kantlinie 40,41,43 verlaufen. Während dieses Prozesses wird der ebene Zuschnitt 36 auf eine Temperatur gebracht und gehalten, die geringfügig oberhalb der Schmelztemperatur des thermoplastischen Kunststoffes des "Organo"-Blechs liegt.

Durch den erfindungsgemäßen Umformprozess ist gewährleistet, dass das interlaminare Gleiten im Wesentlichen nur in einer Richtung erfolgt, so dass keine Beeinträchtigung der Faserorientierung und/oder der Faserintegrität und keine Faltenbildung (Wellenbildung) sowie hierdurch bedingte Delaminationen entstehen (Erzeugung der Ebenen 38,39 mit den beiden Kantlinien 40,41 aus der ersten (Grund)Ebene 37 und Generierung der vierten Ebene 42 aus der Ebene 38 unter Bildung der Kantlinie 43).

Nach den Kantprozessen ist das interlaminare Gleiten weitgehend abgeschlossen und der Vorformling 34 kann in einem abschließenden zweiten Umformungsschritt konsolidiert werden, um die endgültige geometrische Gestalt durch die Anwendung von Druck und Temperatur zu erhalten.

Das erfindungsgemäße Verfahren ist über den exemplarisch beschriebenen Winkel 4 sowie das Bauteil 35 hinaus zur Schaffung von Bauteilen aller Art mit einer komplexen geometrischen Gestalt mit faserverstärkten thermoplastischen Kunststoffen durch Umformen mittels Kanten geeignet.

### Bezugszeichenliste

- 1: Zuschnitt
- 2: Vorformling
- 3: Bauteil (fertig)
- 4: Winkel (fertig)
- 5: Ausschnitt
- 6: Kreisausnehmung
- 7: Kantlinie (weich)
- 8: Kantlinie (weich)
- 9: Kantlinie (weich)
- 10: Kantlinie (weich)
- 11: Krümmungsbereich
- 12: Krümmungsbereich
- 13: Kante
- 14: Kante
- 15: Kantlinie (final)
- 16: Kantlinie (final)
- 17: Kantlinie (final)
- 18: Schenkel (Winkel)
- 19: Schenkel (Winkel)
- 20: Rückfläche (Winkel)
- 21: Ebene (Anlagefläche Winkel)
- 22: Ebene (Anlagefläche Winkel)
- 23: Ebene (Basisfläche Winkel)
- 24: Ebene (Basisfläche Winkel)
- 25: Unterwerkzeug
- 26: Grundplatte
- 27: Fläche (obere)
- 28: Fläche (vordere große Seitenfläche)
- 29: Fläche (vordere große Seitenfläche)
- 30: Fläche (hintere Seitenfläche)
- 31: Fläche (hintere kleine Seitenfläche)
- 32: Fläche (hintere kleine Seitenfläche)
- 33: Werkzeugspitze
- 34: Vorformling
- 35: Bauteil (Winkel)
- 36: ebener Zuschnitt
- 37.: (erste) Ebene
- 38: (zweite) Ebene
- 39: (dritte) Ebene
- 40: Kantlinie
- 41: Kantlinie
- 42: (vierte) Ebene
- 43: Kantlinie

## Patentansprüche

1. Verfahren zur Herstellung eines Bauteils (3) mit folgenden Schritten:
a) Bereitstellen eines Zuschnitts (1), welcher einen thermoplastischen Kunststoff aufweist, der mit mehreren Faserlagen verstärkt ist, wobei der Zuschnitt (1) einen im Wesentlichen V-förmigen Ausschnitt (5) aufweist, dessen Spitze mit einem Schnittpunkt von drei vorbestimmten Kantenlinien (7, 8, 9, 10) des Zuschnitts (1) zusammenfällt und eine in etwa kreisförmige Ausnehmung (6) aufweist;
b) Umformen des Zuschnitts (1) entlang der vorbestimmten Kantenlinien (7, 8, 9, 10) unter weitgehendem Abschluss eines Gleitens der Faserlagen zu einem Vorformling (2) und Bildung von Kantenlinien (15, 16, 17), welche in etwa senkrecht zueinander verlaufen;
c) Auflegen des Vorformlings (2) auf ein Ober- oder Unterwerkzeug (25) eine Presse, welches eine pyramidenförmige Gestalt mit einer Grundfläche (26) und drei Seitenflächen (27, 28, 29), die eine Spitze (33) zusammen bilden, aufweist, derart, dass die in etwa kreisförmige Ausnehmung (6) des Vorformlings (2) im Bereich der Spitze (33) des Ober- oder Unterwerkzeugs (25) aufliegt und sich dem V-förmigen Ausschnitt (5) des Vorformlings (2) zugeordnete Basisflächen (23, 24) des Vorformlings (2) an eine der Seitenflächen (27, 28, 29) wenigstens bereichsweise anschmiegen;
d) Zusammenfahren der Presse zum Bilden der finalen Kantenlinien (15, 16, 17) und Konsolidieren des Vorformlings (2) und damit Bilden des Bauteils (3).

## Claims

1. Process for the production of a component (3), comprising the steps of:
a) preparing a blank (1) which has a thermoplastic material reinforced with several fiber layers, wherein the blank (1) has an essentially V-shaped cut-out (5) whose tip coincides with a point of intersection of three predetermined edge lines (7, 8, 9, 10) of the blank (1) and has an approximately circular recess (6);
b) shaping the blank (1) along the predetermined edge lines (7, 8, 9, 10), largely with termination of a slide of the fiber layers, to form a preform (2), and forming edge lines (15, 16, 17) which run approximately perpendicularly to each other;
c) placing the preform (2) on an upper or lower tool (25) of a press, which has a pyramid shape with a base surface (26) and three lateral surfaces (27, 28, 29), which together form a tip (33), such that the approximately circular recess (6) of the preform (2) rests in the region of the tip (33) of the upper or lower tool (25) and base surfaces (23, 24) of the preform (2), which are assigned to the V-shaped cut-out (5) of the preform (2), bear against one of the lateral surfaces (27, 28, 29) at least partially;
d) moving the press together to form the final edge lines (15, 16, 17), and consolidation of the preform (2) and hence formation of the component (3).

## Revendications

1. Procédé de fabrication d'un composant (3) comprenant les étapes suivantes :
a) Préparation d'une découpe (1), qui présente une matière artificielle thermoplastique, qui est renforcée par plusieurs couches de fibres, la découpe (1) présentant une encoche (5) essentiellement en forme de V, dont la pointe s'affaisse avec un point d'intersection de trois lignes de pliage prédéfinies (7, 8, 9, 10) de la découpe (1) et un évidement (6) approximativement circulaire ;
b) Façonnage de la découpe (1) le long des lignes de pliage prédéfinies (7, 8, 9, 10) sous l'importante charge d'un coulissement des couches de fibres en une pré-ébauche (2) et formation de lignes de pliage (15, 16, 17), qui s'étendent approximativement perpendiculairement les unes par rapport aux autres ;
c) Dépose de la pré-ébauche (2) sur un outil supérieur ou un outil inférieur (25) d'une presse, qui se présente sous forme de pyramide avec une surface de base (26) et trois surfaces latérales (27, 28, 29), qui forment conjointement une pointe (33), de telle sorte que l'évidement approximativement circulaire (6) de la pré-ébauche (2) se trouve dans la zone de la pointe (33) de l'outil supérieur ou de l'outil inférieur (25) et que des surfaces de base (23, 24) de la pré-ébauche (2) associées à l'encoche en forme de V (5) de la pré-ébauche sont plaquées sur une des surfaces latérales (27, 28, 29) au moins en partie ;
d) Rapprochement de la presse pour former les lignes de pliage finales (15, 16,17) et pour consolider la pré-ébauche (2) et ainsi pour former le composant (3).
